(19) Europäisches Patentamt / European Patent Office / Office européen des brevets

(11) **EP 3 848 259 B1**

(12) **EUROPEAN PATENT SPECIFICATION**

(45) Date of publication and mention
of the grant of the patent:
**30.08.2023 Bulletin 2023/35**

(21) Application number: **21150664.7**

(22) Date of filing: **08.01.2021**

(51) International Patent Classification (IPC):
**B60T 8/172** (2006.01)    **B60T 8/1763** (2006.01)
**B60W 40/06** (2012.01)    **B60W 40/076** (2012.01)

(52) Cooperative Patent Classification (CPC):
**B60T 8/172; B60W 40/076;** B60T 2210/12;
B60W 2510/105; B60W 2520/26; B60W 2520/28

(54) **APPARATUS FOR DETERMINING STATE OF ROAD SURFACE**

VORRICHTUNG ZUR BESTIMMUNG DES ZUSTANDS EINER STRASSENOBERFLÄCHE

APPAREIL DE DÉTERMINATION D'ÉTAT DE SURFACE DE ROUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2020 JP 2020002498**

(43) Date of publication of application:
**14.07.2021 Bulletin 2021/28**

(73) Proprietor: **Sumitomo Rubber Industries, Ltd.
Kobe-shi, Hyogo 651-0072 (JP)**

(72) Inventor: **MAEDA, Yusuke
Kobe-shi,, Hyogo 651-0072 (JP)**

(74) Representative: **TBK
Bavariaring 4-6
80336 München (DE)**

(56) References cited:
WO-A1-2007/116123    CN-A- 110 203 205
CN-A- 110 588 657

**Description**

TECHNICAL FIELD

The present invention relates to a determining apparatus, a method, and a program for determining a state of a road surface on which a vehicle is traveling according to the preamble of claims 1, 5 and 6.

BACKGROUND ART

In order to control the traveling of a vehicle, it is important to keep track of a slip ratio of tires fitted to the vehicle that is traveling. The slip ratio can be defined as (velocities of drive wheels - vehicle velocity) / vehicle velocity, for example, and this ratio indicates how likely the tires are to slip. The slip ratio depends on the state of the road surface (how likely the tires are to slip), and thus there are cases in which the state of the road surface during travel is determined by determining the slip ratio during travel, and is used to control the traveling of the vehicle. The information on the state of the road surface is used to issue an alarm to the driver or to control the braking system, for example. The slip ratio has a linear relationship with a driving force of the vehicle (or an acceleration of the vehicle), and it is possible to determine a state of the road surface according to a regression coefficient (a slope) indicating this relationship, for example (see JP 2002-274357A and JP 2002-362345A, for example). The regression coefficient can be calculated from a large number of data sets of a slip ratio that changes from time to time during travel and a driving force (acceleration) that also changes from time to time during travel.

JP 2002-274357 A and JP 2002-362345 A disclose a determining apparatus, a method, and a program for determining a state of a road surface on which a vehicle is traveling having the features of the preamble of claims 1, 5 and 6.

However, there is a strong possibility that the above-described regression coefficient indicating a relationship between the slip ratio and the driving force does not have an adequate value when it is calculated from data sets in a period during which the driving force does not change so much such as a period during which the vehicle is traveling at a constant velocity on a descent, for example. Thus, in such a period, it may not be possible to accurately determine a state of the road surface.

CN 110 588 657 A discloses a joint estimation method for the motion state of a vehicle and the gradient of a road. The joint estimation method comprises the following steps of constructing a ramp driving platform; estimating the motion state of the vehicle by using a square-root adaptive variational Bayesian cubature Kalman filtering algorithm, and forming a vehicle motion state estimation module; building a road gradient unit, and solving a road gradient value based on a ridge regression algorithm to form a road gradient estimation module; and adopting interaction iteration between the two modules to realize j oint estimation of the vehicle motion state and the road gradient.

CN 110 203 205 A discloses an electric vehicle attachment stability and quasi-optimal slip rate detection method. The electric vehicle attachment stability and quasi-optimal slip rate detection method is used for detecting the attachment stability, the quasi-optimal slip rate and the quasi-optimal attachment torque of a vehicle, and is applicable to electrically driven vehicles. According to the method, the traction motor torque T and a wheel speed omega are utilized to observe the tire-ground attachment torque T through a load disturbance observer, the traction motor torque variation delta T and the attachment torque variation delta T are utilized to calculate an attachment stability factor delta, and the quasi-optimal slip rate lambda and the quasi-optimal attachment torque T are identified according to the drastic change in the value of the attachment stability factor.

WO 2007/116123 A1 discloses a method for collecting information on road surface slipperiness comprising collecting from a data bus of a freight vehicle traveling on the road operational data on the vehicle, using the operational data to determine the slip ratio s of the vehicle's driving wheel and the traction force F applied to the road from the driving wheel, and determining the road surface slipperiness from the slip ratio s, the traction force F and the vehicle mass m. In accordance with the invention, the method comprises predetermining the slip ratio S0 of the driving wheel on a non-slip surface as a function of the normal force N applied to the road from the driving wheel and depending on the vehicle mass m, and of the traction force F; determining the slip ratio S, the normal force N1 and the traction force F1 of the driving wheel during driving; determining the normalized slip ratio s' through comparison of the slip ratio S1 of the driving wheel during driving with the predetermined slip ratio S0 on a non-slip surface, with the same traction force Fi and normal force N1; and determining the road surface slipperiness from the normalized slip ratio s'.

SUMMARY OF THE INVENTION

It is an object of the present invention to further develop a determining apparatus, a method, and a program according to the preamble of claims 1, 5 and 6 such that they make it possible to stably determine a state of a road surface during travel of a vehicle.

This object is achieved by a determining apparatus, a method, and a program having the features of claims 1, 5 and 6.

Advantageous further developments are defined in the dependent claims.

According to the above-described aspects, in the case in which it is determined that a variation of the driving force is at least a certain value at the time of determination of a state of the road surface, a regression coefficient (a slope and an intercept) indicating a relationship between the slip ratio and the driving force is calculated based on a large number of data sets of the slip ratio and the driving force at the time of determination of a state of the road surface and therebefore. In such a case, the driving force has a sufficient level of variation, and thus it is possible to calculate an adequate value for determining a state of the road surface, based on a large number of data sets of the slip ratio and the driving force, as a regression coefficient (a slope) indicating a relationship therebetween. On the other hand, in the case in which it is determined that a variation of the driving force is less than the certain value at the time of determination of a state of the road surface, in other words, if the driving force does not change so much, the slope is calculated based on the data set of the slip ratio and the driving force at the time of determination of a state of the road surface, and the intercept that has been already obtained. The intercept, that is, the slip ratio when the driving force is zero is substantially constant regardless of the state of the road surface. Thus, even in the case in which a large number of data sets regarding the driving force with a sufficient level of variation are not obtained, it is possible to calculate an adequate value of the regression coefficient (slope) for determining a state of the road surface, based on such an intercept. Accordingly, it is possible to stably determine a state of the road surface during travel of a vehicle based on the regression coefficient (slope).

BRIEF DESCRIPTION OF THE DRAWINGS

FIG. 1 is a schematic diagram showing a state in which a control unit as a determining apparatus according to a first embodiment is mounted in a vehicle.

FIG. 2 is a block diagram showing the electrical configuration of the control unit according to the first embodiment.

FIG. 3 is a flowchart showing the flow of processing that determines a slip ratio and a state of a road surface based on the slip ratio according to the first embodiment.

FIG. 4 is a graph illustrating a relationship between the slip ratio and the vehicle turning radius.

FIG. 5 is a graph illustrating a relationship between a slope of the slip ratio relative to the driving force, and the lateral acceleration.

FIG. 6 is a graph illustrating a relationship between the slip ratio and the driving force.

FIG. 7 is a flowchart showing the flow of processing that determines a slip ratio and a state of a road surface based on the slip ratio according to a second embodiment.

FIG. 8A is a graph illustrating a relationship between a slope of the slip ratio relative to the driving force according to another definition of the slip ratio, and the lateral acceleration.

FIG. 8B is a graph illustrating a relationship between a slope of the slip ratio relative to the driving force according to another definition of the slip ratio, and the lateral acceleration.

FIG. 9 shows graphs illustrating an evaluation result of the effects of the embodiments.

FIGS. 10A to 10E show graphs illustrating another evaluation result of the effects of the embodiments.

FIG. 11 shows graphs illustrating another evaluation result of the effects of the embodiments.

EMBODIMENTS OF THE INVENTION

Hereinafter, a determining apparatus, a method, and a program according to some embodiments of the present invention will be described with reference to the drawings.

1. First Embodiment

1-1. Configuration of Determining Apparatus

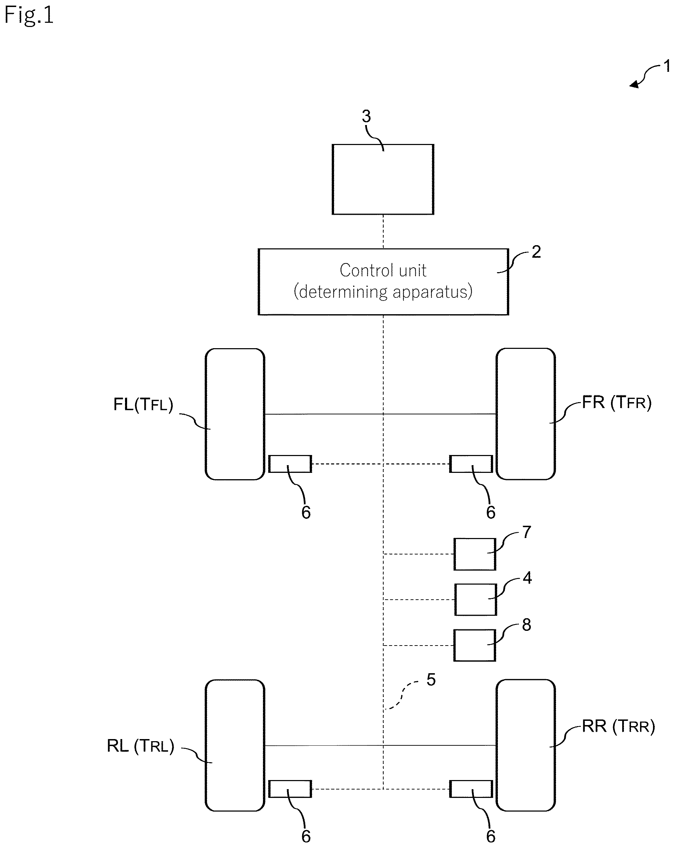

FIG. 1 is a schematic diagram showing a state in which a control unit 2 as a determining apparatus according to this embodiment is mounted in a vehicle 1. The vehicle 1 is a four-wheeled vehicle, and includes a front left wheel FL, a front right wheel FR, a rear left wheel RL, and a rear right wheel RR. Tires $T_{FL}$, $T_{FR}$, $T_{RL}$, and $T_{RR}$ are respectively fitted to the wheels FL, FR, RL, and RR. The vehicle 1 according to this embodiment is a front-engine front-drive vehicle (FF vehicle), wherein the front tires $T_{FL}$ and $T_{FR}$ are tires on drive wheels, and the rear tires $T_{RL}$ and $T_{RR}$ are tires on idler wheels. The control unit 2 determines a slip ratio S indicating how likely the tires $T_{FL}$, $T_{FR}$, $T_{RL}$, and $T_{RR}$ are to slip during travel, based on information on the rotational velocities of the tires $T_{FL}$, $T_{FR}$, $T_{RL}$, and $T_{RR}$ during travel, and determines a state of a road surface on which the vehicle 1 is traveling, based on the slip ratio S. Note that the state of the road surface is how likely the road is to cause the tires $T_{FL}$, $T_{FR}$, $T_{RL}$, and $T_{RR}$ to slip. The information on the state of the road surface can be used in various applications, such as various types of control for controlling the traveling of vehicles, or the generation of a road map regarding the state of road surfaces, for example. Examples of the various types of control for controlling the traveling of vehicles include issuing an alarm to drivers regarding hydroplaning or the like, controlling braking systems, and controlling distances between vehicles.

Wheel velocity sensors 6 are respectively attached to the tires $T_{FL}$, $T_{FR}$, $T_{RL}$, and $T_{RR}$ (more specifically, the wheels FL, FR, RL, and RR) of the vehicle 1, and respectively detect rotational velocities (i.e., wheel velocities) V1 to V4 of the tires fitted to the wheels to which the wheel velocity sensors 6 are attached. V1 to V4 are respectively the rotational velocities of the tires $T_{FL}$, $T_{FR}$, $T_{RL}$, and $T_{RR}$. There is no limitation on the wheel velocity sensors 6, as long as the wheel velocities of the wheels FL, FR, RL, and RR during travel can be detected. For example, they may be sensors that measure wheel velocity from output signals of electromagnetic pickups, or sensors that measure wheel velocity from voltages when electricity is generated through rotation, such as a dynamo. Also, there is no particular limitation on the attachment positions of the wheel velocity sensors 6, and they may be selected as appropriate according to the type of sensor, as long as the rotational velocity can be detected. The wheel velocity sensors 6 are connected to the control unit 2 via the communication line 5. The information of the rotational velocities V1 to V4 detected by the wheel velocity sensors 6 is transmitted to the control unit 2 in real-time.

An acceleration sensor 7 that detects acceleration $\alpha$ of the vehicle 1 is attached to the vehicle 1. There is no particular limitation on the structure and the attachment position of the acceleration sensor 7, as long as the acceleration $\alpha$ of the vehicle 1 can be detected. The acceleration sensor 7 is connected to the control unit 2 via the communication line 5. The information of the acceleration $\alpha$ detected by the acceleration sensor 7 is transmitted to the control unit 2 in real-time, as with the information of the rotational velocities V1 to V4.

Furthermore, a lateral acceleration sensor 4 that detects lateral acceleration y applied to the vehicle 1 is attached to the vehicle 1. The lateral acceleration y is centrifugal acceleration that acts on the vehicle 1 to the outside of turning when the vehicle 1 is turning. There is no particular limitation on the structure and the attachment position of the lateral acceleration sensor 4, as long as the lateral acceleration y can be detected. The lateral acceleration sensor 4 is connected to the control unit 2 via the communication line 5. The information of the lateral acceleration y detected by the lateral acceleration sensor 4 is transmitted to the control unit 2 in real-time, as with the information of the rotational velocities V1 to V4 and the acceleration $\alpha$.

Furthermore, a yaw rate sensor 8 that detects a yaw rate $\omega$ of the vehicle 1 is attached to the vehicle 1. The yaw rate $\omega$ is rotational angular velocity about a vertical axis when the vehicle 1 is turning. The yaw rate sensor 8 may be a sensor that detects a yaw rate using the Coriolis force, for example, but there is no particular limitation on the structure and the attachment position thereof, as long as the yaw rate $\omega$ can be detected. The yaw rate sensor 8 is connected to the control unit 2 via the communication line 5. The information of the yaw rate $\omega$ detected by the yaw rate sensor 8 is transmitted to the control unit 2 in real-time, as with the information of the rotational velocities V1 to V4, the acceleration $\alpha$, and the lateral acceleration $\gamma$.

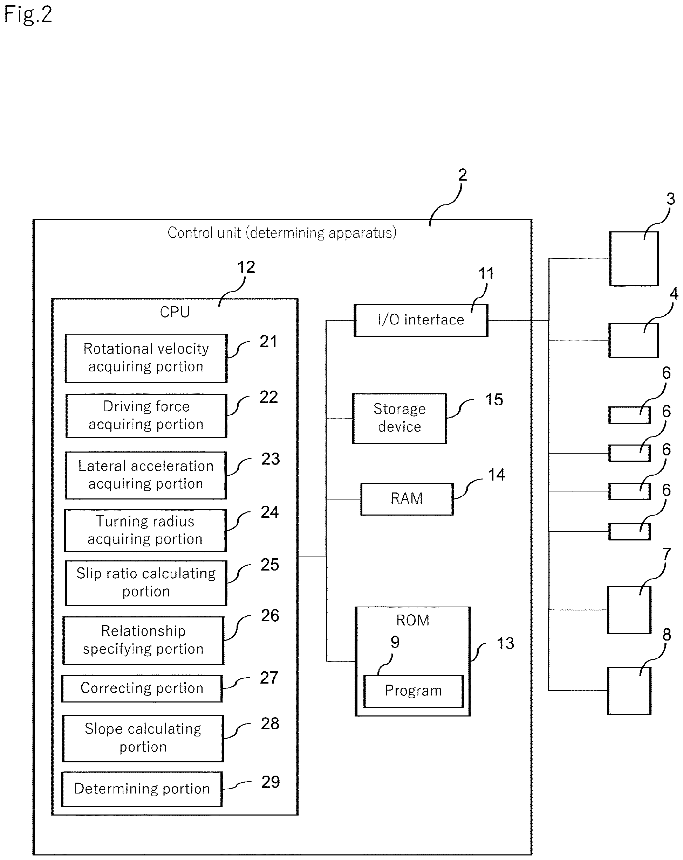

FIG. 2 is a block diagram showing the electrical configuration of the control unit 2. The control unit 2 is mounted in the vehicle 1, and includes an I/O interface 11, a CPU 12, a ROM 13, a RAM 14, and a nonvolatile, rewritable storage device 15, as shown in FIG. 2. The I/O interface 11 is a communication device that communicates with external devices such as the wheel velocity sensors 6, the acceleration sensor 7, the lateral acceleration sensor 4, the yaw rate sensor 8, and an indicator 3. A program 9 for controlling operations of each part of the vehicle 1 is stored in the ROM 13. The CPU 12 virtually operates as a rotational velocity acquiring portion 21, a driving force acquiring portion 22, a lateral acceleration acquiring portion 23, a turning radius acquiring portion 24, a slip ratio calculating portion 25, a relationship specifying portion 26, a correcting portion 27, a slope calculating portion 28, and a determining portion 29, by reading the program 9 from the ROM 13 and executing the read program 9. The details of the operations of the portions 21 to 29 will be described later. The storage device 15 is constituted by a hard disk, a flash memory, or the like. Note that the program 9 may be stored in the storage device 15, rather than the ROM 13. The RAM 14 and the storage device 15 are used as appropriate in calculation of the CPU 12.

The indicator 3 can output various types of information including an alarm to a user (mainly a driver), and may be realized in any form, such as a liquid crystal display, a liquid crystal monitor, a plasma display, or an organic EL display. The attachment position of the indicator 3 may be selected as appropriate, but the indicator 3 is preferably provided at a position at which it can be readily recognized by a driver, e.g. on an instrument panel. In the case in which the control unit 2 is connected to a car navigation system, a car navigation monitor can also be used as the indicator 3. When a monitor is used as the indicator 3, the alarm may be an icon and/or text information that is displayed on the monitor.

1-2. Determination Processing of Slip Ratio and State of Road Surface Based Thereon

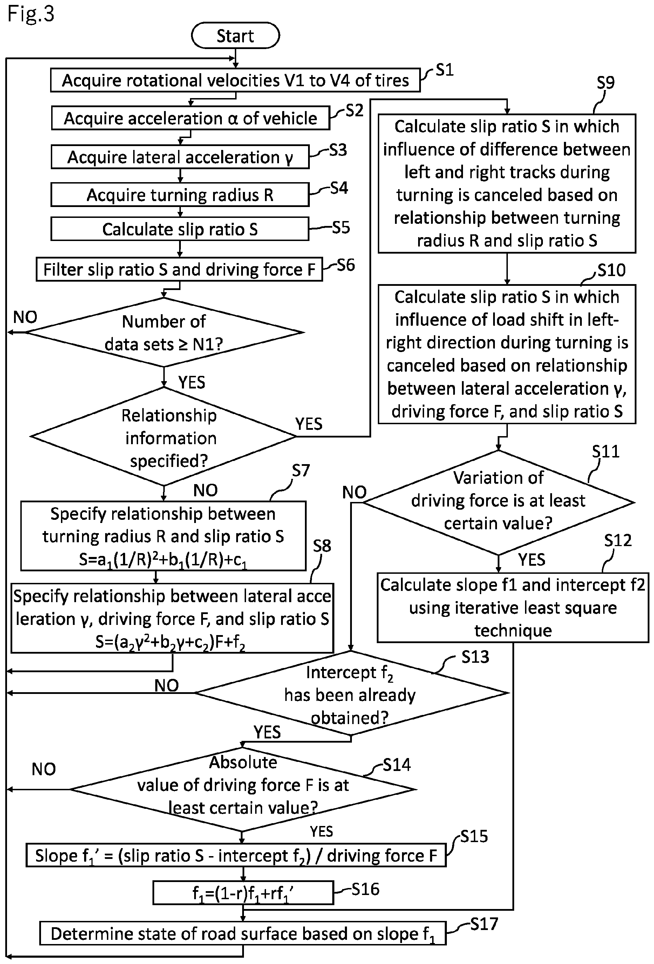

Hereinafter, determination processing that determines the slip ratio S of the tires $T_{FL}$, $T_{FR}$, $T_{RL}$, and $T_{RR}$ during travel, and determines, based on the slip ratio S, a state of a road surface on which the vehicle 1 is traveling will be described with reference to FIG 3. The determination processing is repeatedly performed while the power is supplied to the electric system of the vehicle 1.

In step S1, the rotational velocity acquiring portion 21 acquires rotational velocities V1 to V4 of the tires $T_{FL}$, $T_{FR}$, $T_{RL}$, and $T_{RR}$ during travel. The rotational velocity acquiring portion 21 receives output signals from the wheel velocity sensors 6 in a predetermined sampling period, and converts them into the rotational velocities V1 to V4.

In step S2, the driving force acquiring portion 22 acquires acceleration $\alpha$ of the vehicle 1. The driving force acquiring portion 22 receives an output signal from the acceleration sensor 7 in a predetermined sampling period, and converts it into the acceleration $\alpha$.

In step S3, the lateral acceleration acquiring portion 23 acquires lateral acceleration y applied to the vehicle 1. The lateral acceleration acquiring portion 23 receives an output signal from the lateral acceleration sensor 4 in a predetermined sampling period, and converts it into the lateral acceleration $\gamma$.

In step S4, the turning radius acquiring portion 24 acquires a yaw rate $\omega$ of the vehicle 1. The turning radius acquiring portion 24 receives an output signal from the yaw rate sensor 8 in a predetermined sampling period, and converts it into the yaw rate $\omega$. The turning radius acquiring portion 24 acquires a turning radius R of the vehicle 1, by dividing the vehicle velocity by the yaw rate $\omega$. The vehicle velocity can be obtained by approximating the velocities of the idler wheels, and thus can be calculated by R = (V3+V4)/2$\omega$, for example. The vehicle velocity also can be calculated by integrating the acceleration $\alpha$.

In following step S5, the slip ratio calculating portion 25 calculates a slip ratio S based on the rotational velocities V1 to V4. In this embodiment, the slip ratio S is calculated by (velocities of drive wheels - vehicle velocity) / vehicle velocity, where the velocities of the idler wheels are used as the vehicle velocity. More specifically, in this embodiment, the slip ratio S is calculated by the following equation in which rotational velocities are averaged between the left and right wheels.

$$S = \{(V1+V2)-(V3+V4)\}/(V3+V4)$$

In following step S6, the slip ratio S calculated in step S5 and a driving force F of the vehicle 1 based on the acceleration $\alpha$ acquired in step S2 are subjected to filtering for removing measurement errors. Note that the driving force F of the vehicle 1 can be calculated as appropriate from the acceleration $\alpha$ acquired in step S2.

The data of the rotational velocities V1 to V4, the acceleration $\alpha$, the lateral acceleration y, the yaw rate $\omega$, the turning radius R, and the filtered slip ratio S and driving force F, which are acquired in steps S 1 to S6 successively performed, are handled as a data set acquired at the same time or substantially the same time, and stored in the RAM 14 or the storage device 15. As shown in FIG. 3, steps S1 to S6 are repeatedly performed, and thus the above-mentioned data sets are sequentially acquired. After step S6, when N1 data sets (N1 $\geq$ 2) have been accumulated, the procedure advances to step S7. Step S7 and step S8 successively performed thereafter are performed only once. After steps S7 and S8 are performed once, after steps S1 to S6, the procedure advances to step S9.

In step S7, the relationship specifying portion 26 specifies relationship information indicating a relationship between the turning radius R and the slip ratio S, based on a large number of data sets of the turning radius R calculated in step S4 and the slip ratio S subjected to filtering in step S6. The relationship information is used to correct the slip ratio S in the subsequent step(step S9). Although described later in detail, in this embodiment, the state of the road surface is determined based on a linear relationship between the slip ratio S and the driving force F. However, even in the case in which the vehicle 1 is traveling on road surfaces in the same state, the linear relationship between the slip ratio S and the driving force F is different between when the vehicle 1 is turning and when the vehicle 1 is traveling straight, and thus it may not be possible to accurately determine a state of the road surface. The reason for this is that a track difference (path difference) appears between left and right tires during turning, and the slip ratio S changes from the value during straight travel due to the influence of the track difference. Thus, in this step, the influence caused by a difference between left and right tracks during turning is canceled from the slip ratio S, in order to realize various types of stable control based on the slip ratio S.

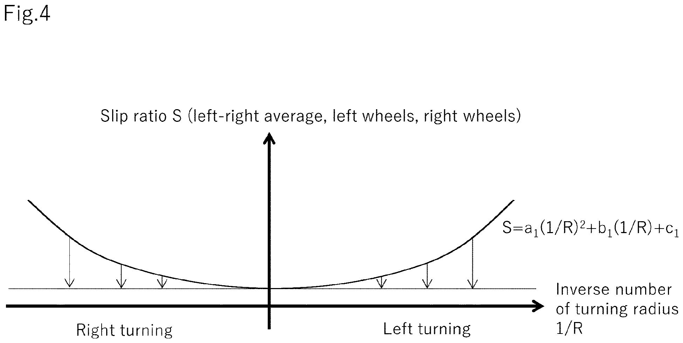

The difference between left and right tracks during turning depends on the turning radius R, and there is a constant relationship between the turning radius Rand the slip ratio S. According to the experiment performed by the inventor of the present invention, the slip ratio S is expressed substantially by a quadratic function of an inverse number of the turning radius R as shown in FIG 4. In step S7, the relationship specifying portion 26 specifies coefficients $a_1$, $b_1$, and $c_1$ of the following equation, as the relationship information indicating a relationship between the turning radius Rand the slip ratio S.

$$S = a_1(1/R)^2+b_1(1/R)+c_1$$

The coefficients $a_1$, $b_1$, and $c_1$ are calculated based on the large number of data sets of the slip ratio S and the turning radius R stored in the RAM 14 or the storage device 15, for example, using a method such as the least squares method.

Note that the vertex of a parabola expressing a relationship between the inverse number of the turning radius R and the slip ratio S corresponds to straight travel, and is substantially on the vertical axis indicating the slip ratio S as shown in FIG 4. In other words, $b_1$ is substantially 0. Thus, in this step, it is also possible to specify only the coefficients ai and $c_1$ as the relationship information using the following equation.

$$S = a_1(1/R)^2 + c_1$$

In following step S8, the relationship specifying portion 26 specifies relationship information indicating a relationship between the lateral acceleration y, the driving force F, and the slip ratio S, based on the large number of data sets of the lateral acceleration y acquired in step S3 and the slip ratio S and the driving force F subjected to filtering in step S6. This relationship information is also used to correct the slip ratio S in the subsequent step (step S10). As described above, the linear relationship between the slip ratio S and the driving force F changes when the vehicle 1 is turning, and thus it may not be possible to accurately determine a state of the road surface. During turning, the linear relationship changes from that during straight travel due to the influence of not only a difference between left and right tracks but also a load shift in the left-right direction of the vehicle body. The reason for this is that the slip ratio S changes from the value during straight travel also due to the influence of the load shift. Thus, in this step, the influence caused by a load shift in the left-right direction during turning is canceled from the slip ratio S, in order to realize various types of stable control based on the slip ratio S.

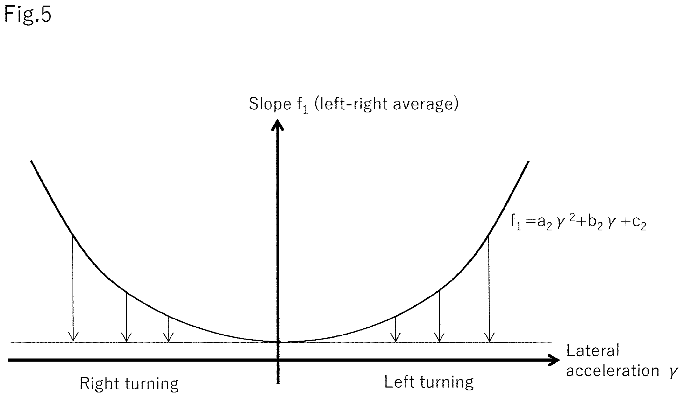

The load shift in the left-right direction during turning depends on the lateral acceleration y, and there is a constant relationship between the lateral acceleration y, and the slope $f_1$ of the slip ratio S relative to the driving force F. According to the experiment performed by the inventor of the present invention, the slope $f_1$ is expressed substantially by a quadratic function of the lateral acceleration y as shown in FIG 5. In step S8, the relationship specifying portion 26 specifies coefficients $a_2$, $b_2$, $c_2$, and $f_2$ of the following equation, as the relationship information indicating a relationship between the lateral acceleration y, the driving force F, and the slip ratio S. Note that $f_2$ is an intercept of the slip ratio S relative to the driving force F, and is a substantially constant value as described later.

$$S = f_1 F + f_2 = (a_2\gamma^2 + b_2\gamma + c_2)F + f_2$$

The coefficients $a_2$, $b_2$, $c_2$, and $f_2$ are calculated based on the large number of data sets of the slip ratio S, the driving force F, and the lateral acceleration y, for example, using a method such as the least squares method. Furthermore, it is also possible that the range of the lateral acceleration y is divided into any ranges, linear regression is performed on the slip ratio S and the driving force F in each range, regression coefficients $f_1$ and $f_2$ are calculated, an average value of the lateral acceleration y and an average value of the slope $f_1$ are calculated in each range, and coefficients $a_2$, $b_2$, and $c_2$ are specified through Gaussian elimination based on these average values.

If step S8 is ended, the procedure returns to step S 1, and steps S 1 to S6 are again repeatedly performed. As shown in FIG 3, after steps S7 and S8 are performed once, and relationship information $a_1$, $b_1$, and $c_1$ between the turning radius R and the slip ratio S, and relationship information $a_2$, $b_2$ and $c_2$ between the lateral acceleration y, the driving force F, and the slip ratio S are specified, every time steps S 1 to S6 are performed once, steps S9 to S 17 are repeatedly performed successively thereafter.

In step S9, the correcting portion 27 corrects the slip ratio S acquired in the latest step S6, based on the relationship information $a_1$, $b_1$, and $c_1$ indicating the relationship between the turning radius R and the slip ratio S, and the turning radius R acquired in the latest step S4. As described above, the slip ratio S is expressed by a quadratic function of an inverse number of the turning radius R. Thus, the correcting portion 27 corrects the slip ratio S, by subtracting a value obtained by multiplying a square value of an inverse number of the turning radius R during the correction by the coefficient $a_1$, from the slip ratio S, using the following equation.

$$S = S - a_1(1/R)^2$$

Note that it is also possible to correct the slip ratio S, by further subtracting a value obtained by multiplying an inverse number of the turning radius R during the correction by the coefficient $b_1$, from the slip ratio S, using the following equation.

$$S = S-a_1(1/R)^2-b_1(1/R)$$

With the above-listed correction equations, as shown in FIG 4, it is possible to calculate a slip ratio S converted to the value substantially when $(1/R) = 0$, that is, during straight travel, and to cancel the influence of a track difference due to left turning and right turning, from the slip ratio S.

In the next step S10, the correcting portion 27 further corrects the slip ratio S acquired in step S9, based on the relationship information $a_2$, $b_2$ and $c_2$ indicating the relationship between the lateral acceleration y and the slip ratio S, the lateral acceleration y acquired in the latest step S3, and the driving force F acquired in the latest step S6. As described above, the slip ratio S can be expressed by a linear function of the driving force F where the slope is taken as $f_1$, and the slope $f_1$ is expressed by a quadratic function of the lateral acceleration $\gamma$. Thus, using the following equation, the correcting portion 27 calculates the sum of a value obtained by multiplying a square value of the lateral acceleration y during the correction by the coefficient $a_2$, a value obtained by multiplying the lateral acceleration y during the correction by the coefficient $b_2$, and $c_2$, calculates the product of the sum and the driving force F during the correction, and subtracts the product from the slip ratio S acquired in step S9, thereby further correcting the slip ratio S.

$$S = S-f_1F = S-(a_2\gamma^2+b_2\gamma+c_2)F$$

Note that $b_2$ is also substantially 0, and thus it is also possible to correct the slip ratio S using the following equation.

$$S = S-(a_2\gamma^2+c_2)F$$

With the above-listed correction equations, it is possible to calculate a slip ratio S converted to the value during straight travel, and to cancel the influence of a load shift in the left-right direction due to left turning and right turning, from the slip ratio S.

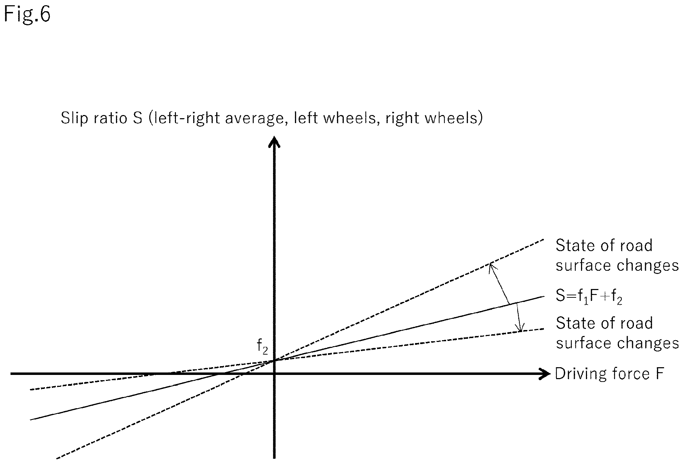

In the following step S11 to S17, the state of the road surface (how likely the tires are to slip) is determined based on the slip ratio S corrected as described above. In this embodiment, the state of the road surface is determined based on a relationship between the slip ratio S and the driving force F. There is a linear relationship between the slip ratio S and the driving force F as shown in FIG 6, and the slope $f_1$ of the slip ratio S relative to the driving force F changes in accordance with the state of the road surface. Accordingly, in these steps, the regression coefficient (the slope fi) indicating a linear relationship between the slip ratio S and the driving force F is calculated based on data sets of the slip ratio S and the driving force F acquired up to that point in time, and the state of the road surface is determined based on the regression coefficient.

The regression coefficient can be calculated based on the large number of data sets of the slip ratio S and the driving force F. However, in order to accurately calculate a regression coefficient based on the large number of data sets, it is desirable that the variation of the data sets is at least a certain value. However, for example, in a period during which the driving force F does not change so much such as a period during which the vehicle is traveling at a constant velocity on a descent, there is not so much variation of the data sets. Thus, in this embodiment, the regression coefficient (the slope fi) is determined using a different method according to the level of the variation of the driving force F at the time of determination of a state of the road surface.

In step S11, the slope calculating portion 28 determines whether or not the variation of the driving force F is at least the certain value, at a current time corresponding to a time to determine a state of the road surface. In this embodiment, the width and the variance of a large number of values of the driving force F acquired in a latest predetermined period are calculated, and, if they are both at least predetermined threshold values respectively, it is determined that the variation is at least the certain value, and the procedure advances to step S12. On the other hand, if at least one of the width and the variance of the large number of values of the driving force F is smaller than the corresponding predetermined threshold value, it is determined that the variation is less than the certain value, and the procedure advances to step S13.

In step S12, the slope calculating portion 28 calculates regression coefficients $f_1$ and fz indicating the linear relationship between the slip ratio S and the driving force F expressed by the following equation, based on a large number of data sets of the slip ratio S and the driving force F at a current time corresponding to a time to determine a state of the road surface, and in a predetermined period therebefore.

$$S = f_1F+f_2$$

The regression coefficients $f_1$ and $f_2$ can be calculated, for example, using a method such as the least squares method. At this time, the regression coefficients $f_1$ and $f_2$ may be calculated sequentially or in batches, based on the large number of data sets of the slip ratio S and the driving force F. In this embodiment, the iterative least square technique is used as a preferable example. In step S12, the driving force F contained in a large number of data sets has a sufficient level of variation, and thus the regression coefficients $f_1$ and $f_2$ indicating the linear relationship between the slip ratio S and the driving force F can be accurately calculated based on such a large number of data sets.

On the other hand, if it is determined in a latest predetermined period that the variation of the driving force F is less than the certain value, in other words, if the driving force F does not change so much, step S13 and the following steps S14 to S 16 are performed. In this case, even when the regression coefficients $f_1$ and $f_2$ are calculated based on a large number of data sets in a latest period, the regression coefficients $f_1$ and $f_2$ may not be adequate values indicating a linear relationship between the slip ratio S and the driving force F. However, even in such a case, if the intercept $f_2$ has been already obtained, it is possible to calculate an adequate regression coefficient $f_1$ indicating the linear relationship.

Specifically, as shown in FIG 6, the linear relationship between the slip ratio S and the driving force F changes in accordance with the state of the road surface, but the factor that changes is only the slope $f_1$. That is to say, the slip ratio S when the intercept $f_2$, that is, the driving force F = 0 is substantially constant regardless of the state of the road surface. Thus, even in the case in which a large number of data sets regarding the driving force F with a sufficient level of variation are not obtained, it is possible to calculate an adequate slope $f_1$ based on at least one data set (F, S) at the time of determination of the state of the road surface, as long as such an intercept $f_2$ has been already obtained. Thus, in step S 13, the slope calculating portion 28 determines whether or not an intercept $f_2$ has been already obtained, and, if an intercept $f_2$ has been already obtained, the procedure advances to step S14. On the other hand, if an intercept $f_2$ has not been already obtained, the determination of a state of a road surface at a current time (step S17) is omitted, and the procedure returns to step S1.

In step S14, the slope calculating portion 28 determines whether or not the absolute value of the driving force F at a current time corresponding to a time to determine a state of the road surface is at least the certain value, and, if it is determined that the absolute value is at least the certain value, the procedure advances to step S15. In step S15, the slope calculating portion 28 calculates a slope $f_1$, based on the data set of the slip ratio S and the driving force F at the current time corresponding to a time to determine a state of the road surface, and the intercept $f_2$ that has been already obtained, and the procedure advances to step S16. The slope $f_1$ is calculated by the following equation. Note that the slope $f_1$ that is calculated in this step is indicated as $f_1'$ in order to distinguish it from the slope $f_1$ that is calculated in step S12 or a later-described subsequent step S16.

$$f_1' = (S - f_2)/F$$

Incidentally, if the absolute value of the driving force F at a current time corresponding to a time to determine a state of the road surface is less than the certain value, the distance between the current data set (F, S) and the point $(0, f_2)$ indicated by the intercept $f_2$ is short, and thus it may not be possible to calculate an adequate slope $f_1'$. Thus, in this embodiment, if it is determined in step S14 that the absolute value of the driving force F is less than the certain value, the determination of a state of a road surface at a current time (step S17) is omitted, and the procedure returns to step S1.

In step S16, the slope calculating portion 28 calculates a slope $f_1$ that is used to determine a state of the road surface, by weighting and compositing the slope $f_1'$ and the latest slope $f_1$ using the following equation. In this case, r is a weight coefficient for compositing a previously calculated slope $f_1$ and a current slope $f_1'$.

$$f_1 = (1-r)f_1 + rf_1'$$

In the next step S17, the determining portion 29 determines a state of the road surface, based on the slope $f_1$ calculated in step S12 or S16. The determining portion 29 compares the slope $f_1$ with a predetermined threshold value, and determines that hydroplaning or the like is likely to occur and the road surface is slippery in the case in which the slope is at least the threshold value. At this time, for example, the determining portion 29 causes the indicator 3 to display an alarm to the driver indicating that the road surface is slippery. Furthermore, the determining portion 29 calculates an index indicating how the road surface is slippery, according to the slope $f_1$, and delivers it to processing of various types of control that are performed on the control unit 2. Examples of the control include control of the brakes during travel of a vehicle, control of the distance between vehicles, and the like.

If step S17 is ended, the procedure returns to step S1. According to the above-described method, it is possible to calculate a slip ratio S that is adequate to perform various types of control, and to calculate an adequate regression coefficient (slope $f_1$), and thus it is possible to stably determine a state of the road surface during travel of the vehicle 1.

2. Second Embodiment

Next, a determining apparatus according to the second embodiment will be described. Note that the hardware configuration of the determining apparatus according to the second embodiment is similar to that of the first embodiment, and thus, in the description below, only the determination processing according to the second embodiment will be described.

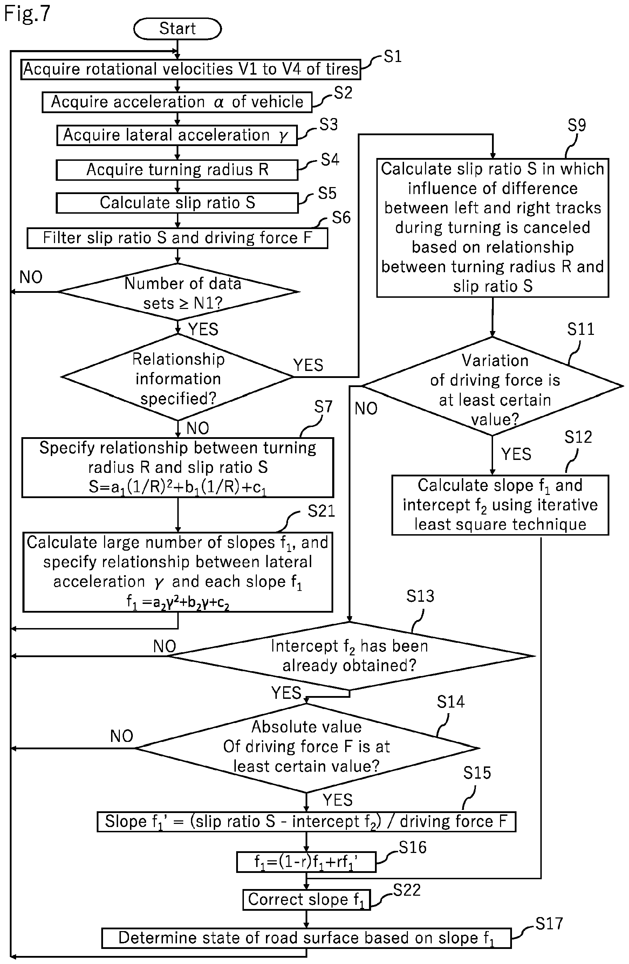

The determination processing according to the second embodiment is performed according to the flowchart shown in FIG 7. In the description below, a description of aspects that are similar to those in the determination processing according to the first embodiment has been omitted. The determination processing of the first embodiment and that of the second embodiment are different from each other in the following aspects. That is to say, in the first embodiment, the slip ratio S is corrected based on a relationship between the lateral acceleration y, the driving force F, and the slip ratio S (step S10), and the slope $f_1$ is calculated based on the corrected slip ratio S, whereas, in the second embodiment, the slope $f_1$ is corrected based on a relationship between the slope $f_1$ and the lateral acceleration y shown in FIG 5.

Specifically, step S21 is performed instead of step S8, and step S10 is omitted. According to the experiment performed by the inventor of the present invention, as described above, there is a constant relationship between the lateral acceleration y and the slope $f_1$. More specifically, as shown in FIG 5, the slope $f_1$ is expressed substantially by a quadratic function of the lateral acceleration y. In step S21, the relationship specifying portion 26 calculates a regression coefficient (a slope $f_1$), as relationship information indicating a linear relationship between the driving force F and the slip ratio S, based on the large number of data sets of the slip ratio S and the driving force F subjected to filtering in step S6. At this time, the relationship specifying portion 26 calculates a large number of slopes $f_1$, and specifies the lateral acceleration y from which each slope $f_1$ is obtained. Accordingly, a large number of data sets of the slope $f_1$ and the lateral acceleration y are acquired. At this time, the regression coefficient $f_1$ may be calculated sequentially or in batches, based on the large number of data sets of the slip ratio S and the driving force F.

Subsequently, the relationship specifying portion 26 specifies coefficients $a_2$, $b_2$, and $c_2$ of the following equation based on the large number of data sets (y, $f_1$), as relationship information indicating a relationship between the lateral acceleration y and the slope $f_1$.

$$f_1 = a_2\gamma^2 + b_2\gamma + c_2$$

The coefficients $a_2$, $b_2$, and $c_2$ are calculated based on the large number of data sets of the lateral acceleration y and the slope $f_1$, for example, using a method such as the least squares method. Furthermore, it is also possible that the range of the lateral acceleration y is divided into any ranges, an average value of the lateral acceleration y and an average value of the slope $f_1$ are calculated in each range, and coefficients $a_2$, $b_2$, and $c_2$ are specified through Gaussian elimination based on these average values.

Accordingly, the coefficients $a_2$, $b_2$, and $c_2$ are specified as relationship information indicating a relationship between the lateral acceleration y and the slope $f_1$. The relationship information is used in the subsequent step S22 for correcting the slope $f_1$. Step S22 is performed after the slope $f_1$ is calculated in steps S12 and S16, in order to correct the slope $f_1$.

In step S22, the correcting portion 27 corrects the slope $f_1$, based on the coefficients $a_2$, $b_2$, and $c_2$ indicating a relationship between the lateral acceleration y and the slope $f_1$, and the lateral acceleration y during the correction, using the following equation.

$$f_1 = f_1 - a_2\gamma^2 - b_2\gamma$$

Note that $b_2$ is also substantially 0, and thus it is also possible to correct the slope $f_1$ using the following equation.

$$f_1 = f_1 - a_2\gamma^2$$

Subsequently, the procedure advances to step S17, and the determining portion 29 determines a state of the road surface based on the slope $f_1$ corrected in step S22, as in the first embodiment. Also, according to this method, the influence caused by a load shift in the left-right direction during turning can be substantially canceled from the slip ratio S as in the first embodiment, and thus it is possible to realize various types of stable control based on the slip ratio S.

3. Modified Examples

Although an embodiment of the present invention has been described thus far, the present invention is not limited to the above embodiment, and various modifications may be made without departing from the gist of the present invention. For example, the following modifications may be made. The gist of the following modifications may be combined as appropriate.

3-1

The function of determining the slip ratio S and the state of the road surface based thereon according to the foregoing embodiments can be applied also to rear-drive vehicles and four-wheel drive vehicles. Moreover, this function is not limited to four-wheeled vehicles, and can be applied also to three-wheeled vehicles, six-wheeled vehicles, and the like as appropriate.

3-2

The method for acquiring the lateral acceleration y of the vehicle 1 is not limited to that described in the foregoing embodiments. For example, it is also possible to acquire the lateral acceleration y from the information of the yaw rate $\omega$ from the yaw rate sensor 8 and the rotational velocities V1 to V4.

3-3

In the foregoing embodiments, the relationship information is specified every time a vehicle travels, but it is also possible that the relationship information is derived in advance, and is referred to during correction of the slip ratio S or the slope $f_1$.

3-4

The method for calculating the slip ratio S is not limited to that described in the foregoing embodiments. For example, if the slip ratio is defined as: slip ratio S =(velocities of drive wheels - vehicle velocity) / vehicle velocity, it is also possible to calculate a slip ratio S while taking, as the vehicle velocity, a value obtained by integrating the acceleration $\alpha$ acquired by the acceleration sensor 7.

Furthermore, it is also possible that the slip ratio S is calculated, not by averaging the rotational velocities of the left and right wheels as in the foregoing embodiments, but by using only the rotational velocities V1 and V3 of the left wheels or the rotational velocities V2 and V4 of the right wheels as follows. Note that the following equations are given assuming that the vehicle is a front-drive vehicle as in the first embodiment.

$$S = (V1-V3)/V3$$

$$S = (V2-V4)/V4$$

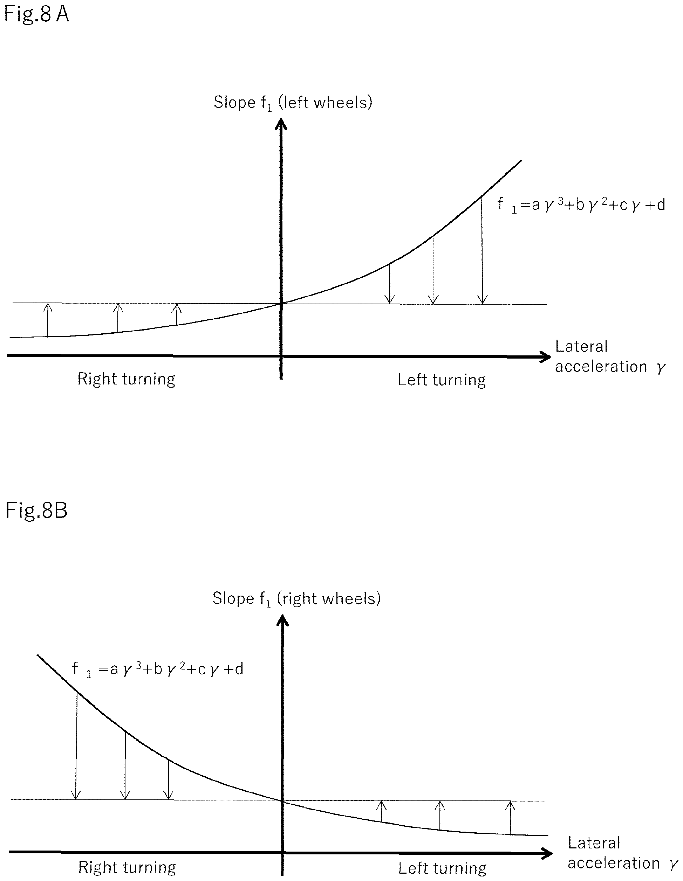

However, if the slip ratio is defined as in the equations above, the relationship between the slope $f_1$ and the lateral acceleration y changes as shown in FIGS. 8A and 8B. According to the experiment performed by the inventor of the present invention, the graphs shown in FIGS. 8A and 8B are approximated substantially to a cubic function. Also, in such a case, it is possible to correct the slip ratio S or the slope $f_1$ by specifying the relationship, as in the first and second embodiments.

3-5

The method for acquiring the driving force F is not limited to that described in the foregoing embodiments. For example, it is also possible to derive the driving force F from the output value of a wheel torque sensor attached to the vehicle 1, from the engine torque and the engine revolution acquired from an engine control apparatus of the vehicle 1, or from the rotational velocities V1 to V4 of the tires.

3-6

The method for acquiring the vehicle velocity is not limited to that described in the foregoing embodiments. For example, it is also possible to acquire the vehicle velocity, not from the rotational velocities of the drive wheels, but from a satellite navigation system such as a GPS communicably connected to the vehicle 1.

3-7

In the foregoing embodiments, the slip ratio S corrected based on the lateral acceleration y and the turning radius R is used to determine a state of the road surface, but there is no limitation to this. It is also possible to use the slip ratio S for various types of control.

4. Evaluation

4-1. Evaluation 1

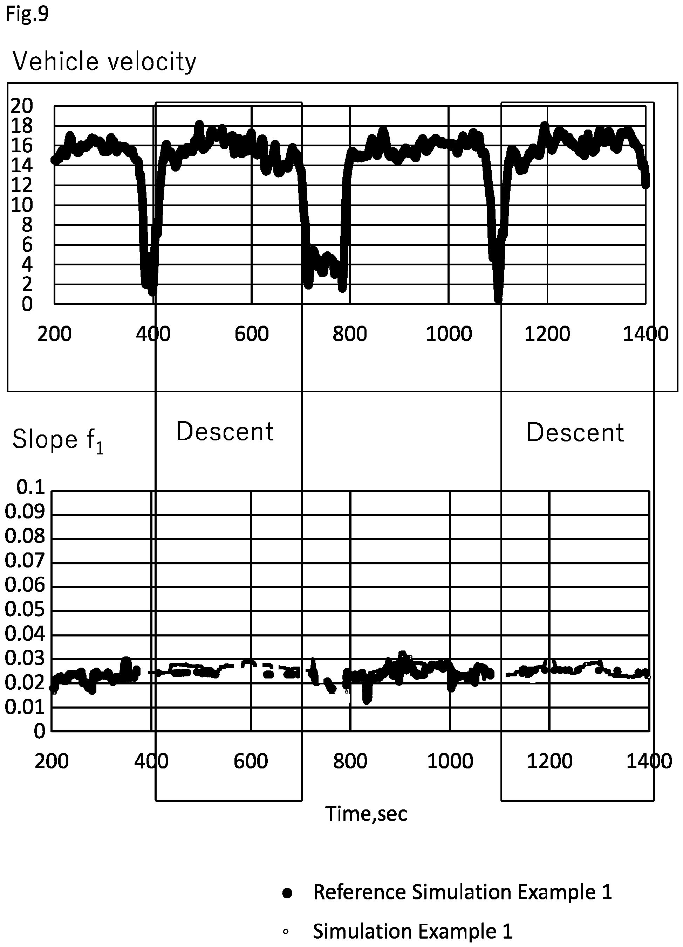

Measurement data was collected while a vehicle was caused to actually travel, thereby acquiring a vehicle velocity, and calculating a slope $f_1$ using a method similar to that in the first embodiment, as Simulation Example 1. Furthermore, as Reference Simulation Example 1, a slope $f_1$ was calculated from measurement data as in Simulation Example 1, using the method of Simulation Example 1 from which the calculation of the slope $f_1$ was omitted in the case in which the variation of the driving force F was less than the certain value. FIG 9 shows the result. In FIG 9, the horizontal axis indicates the time. According to FIG 9, in a period during which the vehicle velocity was substantially constant on a descent and the driving force was substantially zero, the slope $f_1$, that the method of Reference Simulation Example 1 failed to calculate, was calculated by the method of Simulation Example 1. Note that the number of effective data sets of the slope $f_1$ according to Simulation Example 1 was 10524, whereas the number of effective data sets of the slope $f_1$ according to Reference Simulation Example 1 was 6331. Thus, it was seen that, according to Simulation Example 1, it is possible to stably determine a state of the road surface even on a descent and the like.

4-2. Evaluation 2

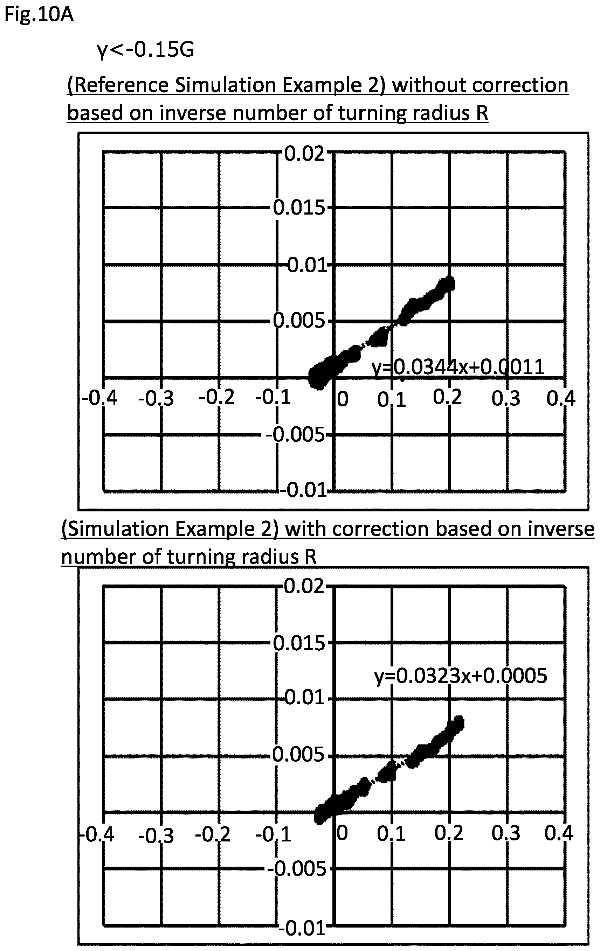

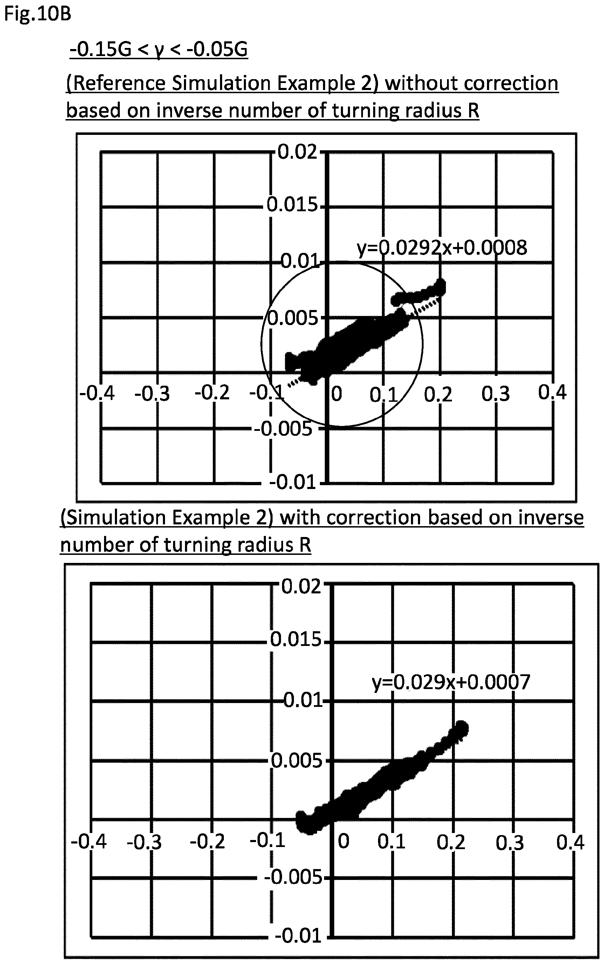

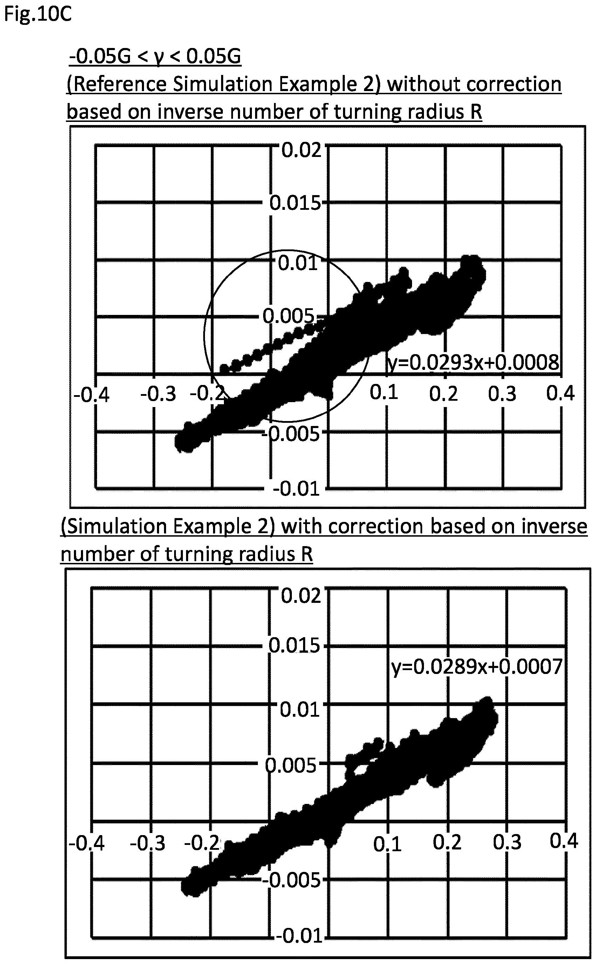

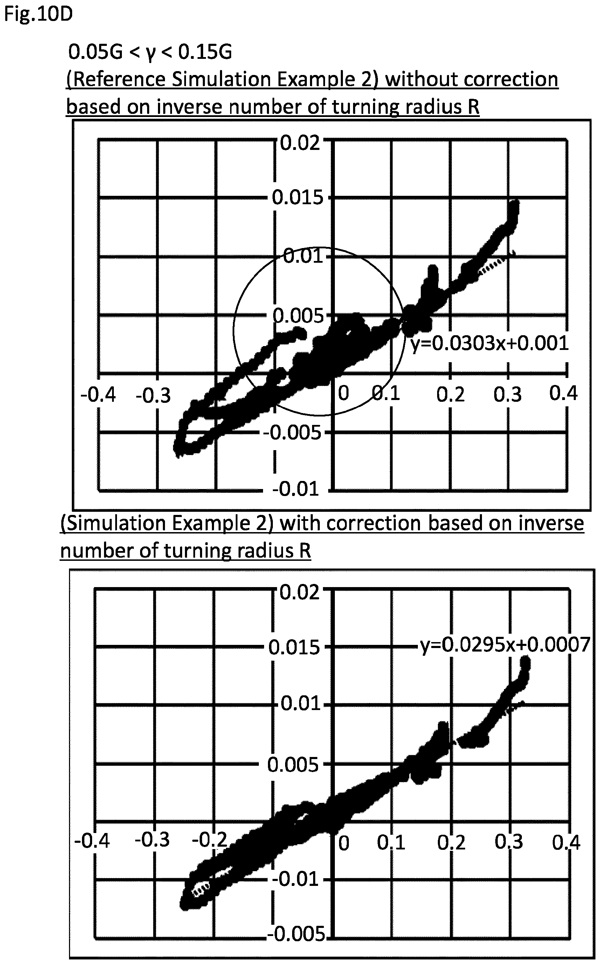

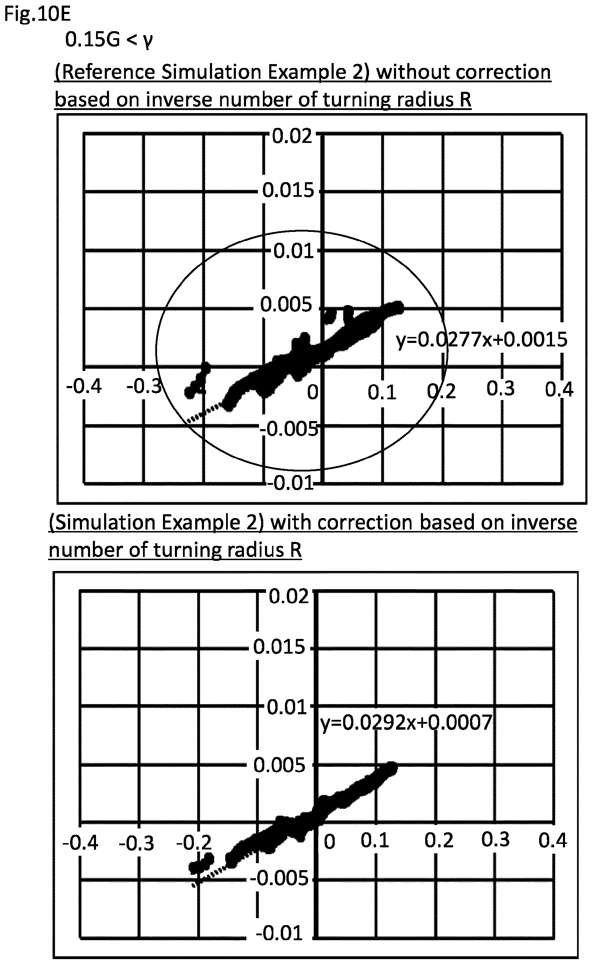

Measurement data was collected while a vehicle was caused to actually travel, and correction based on the turning radius R was performed using a method similar to that in the first embodiment, thereby acquiring a large number of data sets of the slip ratio S as Simulation Example 2. Furthermore, as Reference Simulation Example 2, a large number of data sets of the slip ratio S were acquired from measurement data as in Simulation Example 2, using the method of Simulation Example 2 from which the correction based on the turning radius R was omitted. Then, in each case, values of the driving force F and the slip ratio S were plotted for each predetermined range of the lateral acceleration $\gamma$. FIGS. 10A to 10E show the result. In the graphs of FIGS. 10A to 10E, the horizontal axis indicates the driving force, and the vertical axis indicates the slip ratio. It was seen from FIGS. 10A to 10E that, in the case in which the correction based on the turning radius R was not performed, there appeared some portions in which the linearity of the driving force F and the slip ratio S was lost as indicated by portions enclosed by the circles in the graphs. On the other hand, in the case in which the correction based on the turning radius R was performed, the loss of the linearity is suppressed. Thus, it was seen that it is possible to calculate a more adequate slip ratio S for use in determination of a state of a road surface and the like, through the correction of the slip ratio S based on the turning radius R.

4-3. Evaluation 3

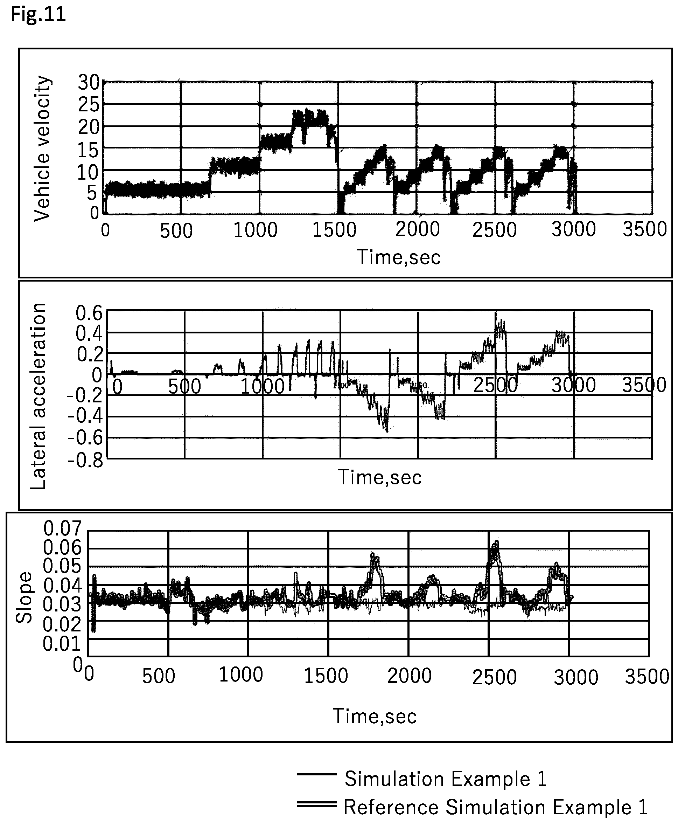

Measurement data was collected while a vehicle was caused to actually travel on a road whose surface was in a substantially stable state, thereby acquiring a vehicle velocity and a lateral acceleration y, and calculating a slope $f_1$ using a method similar to that in the first embodiment, as Simulation Example 3. Furthermore, as Reference Simulation Example 3, a large number of data sets of the slope $f_1$ were acquired from measurement data as in Simulation Example 3, using the method of Simulation Example 3 from which the correction based on the lateral acceleration y was omitted. FIG 11 shows the result. In the graphs of FIG 11, the horizontal axis indicates the time. According to FIG 11, when the lateral acceleration y was significantly applied, the slope $f_1$ significantly changed in Reference Simulation Example 3, whereas the change in the slope $f_1$ was suppressed in Simulation Example 3. Thus, it was seen that it is possible to calculate a more adequate slip ratio S for use in determination of a state of a road surface and the like, through the correction of the slip ratio S based on the lateral acceleration y.

LIST OF REFERENCE NUMERALS

| | | | | | |
|---|---|---|---|---|---|
| 1 | Vehicle | | 2 | Control unit (determining apparatus) | |
| 3 | Indicator | | 4 | Lateral acceleration sensor | |
| 6 | Wheel velocity sensor | | 7 | Acceleration sensor | |
| 8 | Yaw rate sensor | | 9 | Program | |
| 21 | Rotational velocity acquiring portion | | | | |
| 22 | Driving force acquiring portion | | | | |
| 23 | Lateral acceleration acquiring portion | | | | |
| 24 | Turning radius acquiring portion | | | | |
| 25 | Slip ratio calculating portion | | | | |
| 26 | Relationship specifying portion | | 27 | Correcting portion | |
| 28 | Slope calculating portion | | 29 | Determining portion | |
| FL | Front left wheel | | FR | Front right wheel | |

(continued)

| RL | Rear left wheel | RR | Rear right wheel |
| V1 to V4 | Rotational velocity of tire | | |

A determining apparatus for determining a state of a road surface is provided. The determining apparatus includes: a rotational velocity acquiring portion; a slip ratio calculating portion; a driving force acquiring portion; a slope calculating portion; and a determining portion. The slope calculating portion calculates the slope and an intercept, based on many data sets of the slip ratio and the driving force at the time of determination of a state of the road surface and therebefore, when a variation of the driving force is at least a certain value at the time of determination, and calculates the slope based on the data set of the slip ratio and the driving force at the time of determination of a state of the road surface, and the intercept that has been already obtained, when the variation is less than the certain value at the time of determination.

**Claims**

1.  A determining apparatus (2) for determining whether a road surface is slippery or not as a state of the road surface on which a vehicle (1) is traveling, comprising:

    a rotational velocity acquiring portion (21) configured to sequentially acquire a rotational velocity of tires ($T_{FL}$, $T_{FR}$, $T_{RL}$, $T_{RR}$) fitted to the vehicle (1);
    a slip ratio calculating portion (25) configured to sequentially calculate a slip ratio of the tires ($T_{FL}$, $T_{FR}$, $T_{RL}$, $T_{RR}$) based on the sequentially acquired rotational velocity;
    a driving force acquiring portion (22) configured to sequentially acquire a driving force of the vehicle (1);
    a slope calculating portion (28) configured to calculate a slope of the slip ratio relative to the driving force, as a regression coefficient indicating a linear relationship between the slip ratio and the driving force; and
    a determining portion (29) configured to determine a state of the road surface based on the slope, wherein the determining portion (29) determines that the road surface is slippery in the case in which the calculated slope is at least a threshold value,
    **characterized in that** the slope calculating portion (28)

    calculates the slope, and calculates an intercept as another regression coefficient indicating the linear relationship, based on a large number of data sets of the slip ratio and the driving force at the time of determination of a state of the road surface and therebefore, in a case in which it is determined that a variation of the driving force is at least a certain value at the time of determination of a state of the road surface, and
    calculates the slope based on the data set of the slip ratio and the driving force at the time of determination of a state of the road surface, and the intercept that has been already obtained, in a case in which it is determined that the variation is less than the certain value at the time of determination of a state of the road surface.

2.  The determining apparatus (2) according to claim 1, wherein the slope calculating portion (28) calculates the slope sequentially or in batches, in a case in which it is determined that the variation is at least the certain value at the time of determination of a state of the road surface.

3.  The determining apparatus (2) according to claim 1 or 2, wherein the slope calculating portion (28) calculates the slope based on the slip ratio and the driving force at the time of determination of a state of the road surface, and the intercept that has been already obtained, in a case in which it is determined that the variation is less than the certain value at the time of determination of a state of the road surface, and it is determined that an absolute value of the driving force is at least a certain value.

4.  The determining apparatus (2) according to any one of claims 1 to 3, wherein the determining portion (29) determines a state of the road surface according to a slope obtained by weighting and compositing the slope calculated based on the data set of the slip ratio and the driving force at the time of determination of a state of the road surface and the intercept that has been already obtained, and the slope that has been already obtained, in a case in which it is determined that the variation of the driving force is less than the certain value at the time of determination of a state of the road surface.

5. A determining method for determining whether a road surface is slippery or not as a state of the road surface on which a vehicle is traveling, comprising:

sequentially acquiring a rotational velocity of tires fitted to the vehicle;
sequentially calculating a slip ratio of the tires based on the sequentially acquired rotational velocity;
sequentially acquiring a driving force of the vehicle;
calculating a slope of the slip ratio relative to the driving force, as a regression coefficient indicating a linear relationship between the slip ratio and the driving force; and
determining a state of the road surface based on the slope, including determining that the road surface is slippery in the case in which the calculated slope is at least a threshold value
**characterized in that** the calculating of the slope includes:
calculating the slope, and calculating an intercept as another regression coefficient indicating the linear relationship, based on a large number of data sets of the slip ratio and the driving force at the time of determination of a state of the road surface and therebefore, in a case in which it is determined that a variation of the driving force is at least a certain value at the time of determination of a state of the road surface; and
calculating the slope based on the data set of the slip ratio and the driving force at the time of determination of a state of the road surface, and the intercept that has been already obtained, in a case in which it is determined that the variation is less than the certain value at the time of determination of a state of the road surface.

6. A determining program for determining whether a road surface is slippery or not as a state of the road surface on which a vehicle is traveling, the program causing a computer to execute:

sequentially acquiring a rotational velocity of tires fitted to the vehicle;
sequentially calculating a slip ratio of the tires based on the sequentially acquired rotational velocity;
sequentially acquiring a driving force of the vehicle;
calculating a slope of the slip ratio relative to the driving force, as a regression coefficient indicating a linear relationship between the slip ratio and the driving force; and
determining a state of the road surface based on the slope, including determining that the road surface is slippery in the case in which the calculated slope is at least a threshold value
**characterized in that** the calculating of the slope includes:

calculating the slope, and calculating an intercept as another regression coefficient indicating the linear relationship, based on a large number of data sets of the slip ratio and the driving force at the time of determination of a state of the road surface and therebefore, in a case in which it is determined that a variation of the driving force is at least a certain value at the time of determination of a state of the road surface; and
calculating the slope based on the data set of the slip ratio and the driving force at the time of determination of a state of the road surface, and the intercept that has been already obtained, in a case in which it is determined that the variation is less than the certain value at the time of determination of a state of the road surface.

**Patentansprüche**

1. Feststellungsvorrichtung (2) zum Feststellen, ob eine Straßenfläche rutschig ist oder nicht, als einem Zustand der Straßenfläche, auf der sich ein Fahrzeug (1) fortbewegt, die aufweist:

einen Drehgeschwindigkeitserfassungsabschnitt (21), der dazu gestaltet ist, sequenziell eine Drehgeschwindigkeit von Reifen ($T_{FL}$, $T_{FR}$, $T_{RL}$, $T_{RR}$) zu erfassen, die an dem Fahrzeug (1) befestigt sind;
einen Schlupfverhältnisberechnungsabschnitt (25), der dazu gestaltet ist, sequenziell ein Schlupfverhältnis der Reifen ($T_{FL}$, $T_{FR}$, $T_{RL}$, $T_{RR}$) auf Grundlage der sequenziell erfassten Drehgeschwindigkeit zu berechnen;
einen Antriebskrafterfassungsabschnitt (22) der dazu gestaltet ist, sequenziell eine Antriebskraft des Fahrzeugs (1) zu erfassen;
einen Steigungsberechnungsabschnitt (28), der dazu gestaltet ist, eine Steigung des Schlupfverhältnisses bezüglich der Antriebskraft als einen Regressionskoeffizienten zu berechnen, der eine lineare Beziehung zwischen dem Schlupfverhältnis und der Antriebskraft anzeigt; und
einen Feststellungsabschnitt (29), der dazu gestaltet ist, einen Zustand der Straßenfläche auf Grundlage der Steigung festzustellen, wobei der Feststellungsabschnitt (29) feststellt, dass die Straßenfläche rutschig ist, in dem Fall, bei dem die berechnete Steigung mindestens ein Grenzwert ist,
**dadurch gekennzeichnet, dass** der Steigungsberechnungsabschnitt (28)

die Steigung berechnet und einen Achsenabschnitt als einen anderen Regressionskoeffizienten berechnet, der die lineare Beziehung anzeigt, auf Grundlage einer großen Anzahl Datensätze des Schlupfverhältnisses und der Antriebskraft zu dem Zeitpunkt einer Feststellung eines Zustands der Straßenfläche und davor, in einem Fall, bei dem festgestellt wird, dass eine Änderung der Antriebskraft zu dem Zeitpunkt eines Feststellens eines Zustands der Straßenfläche mindestens ein bestimmter Wert ist, und
die Steigung auf Grundlage des Datensatzes des Schlupfverhältnisses und der Antriebskraft zu dem Zeitpunkt eines Feststellens eines Zustands der Straßenfläche und dem bereits erhaltenen Achsenabschnitt berechnet, in einem Fall, bei dem festgestellt wird, dass die Änderung zu dem Zeitpunkt eines Feststellens eines Zustands der Straßenfläche kleiner ist als der bestimmte Wert.

2. Feststellungsvorrichtung (2) gemäß Anspruch 1, wobei der Steigungsberechnungsabschnitt (28) die Steigung sequenziell oder stoßweise berechnet, in einem Fall, bei dem festgestellt wird, dass die Änderung zu dem Zeitpunkt eines Feststellens eines Zustands der Straßenfläche mindestens der bestimmte Wert ist.

3. Feststellungsvorrichtung (2) gemäß Anspruch 1 oder 2, wobei der Steigungsberechnungsabschnitt (28) die Steigung auf Grundlage des Schlupfverhältnisses und der Antriebskraft zu dem Zeitpunkt eines Feststellens eines Zustands der Straßenfläche und dem bereits erhaltenen Achsenabschnitt berechnet, in einem Fall, bei dem festgestellt wird, dass die Änderung zu dem Zeitpunkt eines Feststellens eines Zustands der Straßenfläche kleiner ist als der bestimmte Wert, und festgestellt wird, dass ein Absolutwert der Antriebskraft mindestens ein bestimmter Wert ist.

4. Feststellungsvorrichtung (2) gemäß einem der Ansprüche 1 bis 3, wobei der Feststellungsabschnitt (29) einen Zustand der Straßenfläche gemäß einer Steigung feststellt, die durch Gewichten und Zusammensetzen der Steigung, die auf Grundlage des Datensatzes des Schlupfverhältnisses und der Antriebskraft zu dem Zeitpunkt eines Feststellens eines Zustands der Straßenfläche und dem bereits erhaltenen Achsenabschnitt berechnet wird, und der bereits erhaltenen Steigung erhalten wird, in einem Fall, bei dem festgestellt wird, dass die Änderung der Antriebskraft zu dem Zeitpunkt eines Feststellens eines Zustands der Straßenfläche kleiner ist als der bestimmte Wert.

5. Feststellungsverfahren zum Feststellen, ob eine Straßenfläche rutschig ist oder nicht, als einem Zustand der Straßenfläche, auf der sich ein Fahrzeug fortbewegt, das aufweist:

sequenzielles Erfassen einer Drehgeschwindigkeit von Reifen, die an dem Fahrzeug befestigt sind;
sequenzielles Berechnen eines Schlupfverhältnisses der Reifen auf Grundlage der sequenziell erfassten Drehgeschwindigkeit;
sequenzielles Erfassen einer Antriebskraft des Fahrzeugs;
Berechnen einer Steigung des Schlupfverhältnisses bezüglich der Antriebskraft als einen Regressionskoeffizienten, der eine lineare Beziehung zwischen dem Schlupfverhältnis und der Antriebskraft anzeigt; und
Feststellen eines Zustands der Straßenfläche auf Grundlage der Steigung, das ein Feststellen, dass die Straßenfläche rutschig ist, in dem Fall umfasst, bei dem die berechnete Steigung mindestens ein Grenzwert ist,
**dadurch gekennzeichnet, dass** die Berechnung der Steigung umfasst:

Berechnen der Steigung und Berechnen eines Achsenabschnitts als einen anderen Regressionskoeffizienten, der die lineare Beziehung anzeigt, auf Grundlage einer großen Anzahl Datensätze des Schlupfverhältnisses und der Antriebskraft zu dem Zeitpunkt eines Feststellens eines Zustands der Straßenfläche und davor, in einem Fall, bei dem festgestellt wird, dass eine Änderung der Antriebskraft zu dem Zeitpunkt eines Feststellens eines Zustands der Straßenfläche mindestens ein bestimmter Wert ist; und
Berechnen der Steigung auf Grundlage des Datensatzes des Schlupfverhältnisses und der Antriebskraft zu dem Zeitpunkt eines Feststellens eines Zustands der Straßenfläche und dem bereits erhaltenen Achsenabschnitt, in einem Fall, bei dem festgestellt wird, dass die Änderung zu dem Zeitpunkt eines Feststellens eines Zustands der Straßenfläche kleiner ist als der bestimmte Wert.

6. Ein Feststellungsprogramm für ein Feststellen, ob eine Straßenfläche rutschig ist oder nicht, als einem Zustand der Straßenfläche, auf der sich ein Fahrzeug fortbewegt, wobei das Programm einen Computer dazu veranlasst, auszuführen:

EP 3 848 259 B1

sequenzielles Erfassen einer Drehgeschwindigkeit von Reifen, die an dem Fahrzeug befestigt sind;
sequenzielles Berechnen eines Schlupfverhältnisses der Reifen auf Grundlage der sequenziell erfassten Drehgeschwindigkeit;
sequenzielles Erfassen einer Antriebskraft des Fahrzeugs;
Berechnen einer Steigung des Schlupfverhältnisses bezüglich der Antriebskraft als einen Regressionskoeffizienten, der eine lineare Beziehung zwischen dem Schlupfverhältnis und der Antriebskraft anzeigt; und
Feststellen eines Zustands der Straßenfläche auf Grundlage der Steigung, das ein Feststellen, dass die Straßenfläche rutschig, ist in dem Fall umfasst, bei dem die berechnete Steigung mindestens ein Grenzwert ist, **dadurch gekennzeichnet, dass** die Berechnung der Steigung umfasst:

Berechnen der Steigung und Berechnen eines Achsenabschnitts als einen anderen Regressionskoeffizienten, der die lineare Beziehung anzeigt, auf Grundlage einer großen Anzahl Datensätze des Schlupfverhältnisses und der Antriebskraft zu dem Zeitpunkt eines Feststellens eines Zustands der Straßenfläche und davor, in einem Fall, bei dem festgestellt wird, dass eine Änderung der Antriebskraft zu dem Zeitpunkt eines Feststellens eines Zustands der Straßenfläche mindestens ein bestimmter Wert ist; und
Berechnen der Steigung auf Grundlage des Datensatzes des Schlupfverhältnisses und der Antriebskraft zu dem Zeitpunkt eines Feststellens eines Zustands der Straßenfläche und dem bereits erhaltenen Achsenabschnitt, in einem Fall, bei dem festgestellt wird, dass die Änderung zu dem Zeitpunkt eines Feststellens eines Zustands der Straßenfläche kleiner ist als der bestimmte Wert.

## Revendications

1. Appareil de détermination (2) pour déterminer si une surface de route est glissante ou non en tant qu'état de la surface de route sur laquelle un véhicule (1) est en cours de déplacement, comprenant :

   une partie d'acquisition de vitesse de rotation (21) configurée pour acquérir séquentiellement une vitesse de rotation de pneus ($T_{FL}$, $T_{FR}$, $T_{RL}$, $T_{RR}$) adaptés sur le véhicule (1) ;
   une partie de calcul de taux de glissement (25) configurée pour calculer séquentiellement un taux de glissement des pneus ($T_{FL}$, $T_{FR}$, $T_{RL}$, $T_{RR}$) sur la base de la vitesse de rotation acquise séquentiellement ;
   une partie d'acquisition de force d'entraînement (22) configurée pour acquérir séquentiellement une force d'entraînement du véhicule (1) ;
   une partie de calcul de pente (28) configurée pour calculer une pente du taux de glissement en relation avec la force d'entraînement, en tant que coefficient de régression indiquant une relation linéaire entre le taux de glissement et la force d'entraînement ; et
   une partie de détermination (29) configurée pour déterminer un état de la surface de route sur la base de la pente, dans lequel la partie de détermination (29) détermine que la surface de route est glissante dans le cas où la pente calculée est au moins une valeur de seuil ;
   **caractérisé en ce que** la partie de calcul de pente (28) :

   calcule la pente, et calcule une interception en tant qu'autre coefficient de régression indiquant la relation linéaire, sur la base d'un nombre important d'ensembles de données du taux de glissement et de la force d'entraînement à l'instant de la détermination d'un état de la surface de route et avant, dans le cas où il est déterminé qu'une variation de la force d'entraînement est au moins une certaine valeur à l'instant de la détermination d'un état de la surface de route ; et
   calcule la pente sur la base de l'ensemble de données du taux de glissement et de la force d'entraînement à l'instant de la détermination d'un état de la surface de route, et de l'interception qui a déjà été obtenue, dans le cas où il est déterminé que la variation est inférieure à la certaine valeur à l'instant de la détermination d'un état de la surface de route.

2. Appareil de détermination (2) selon la revendication 1, dans lequel la partie de calcul de pente (28) calcule la pente séquentiellement ou par lots, dans le cas où il est déterminé que la variation est au moins la certaine valeur à l'instant de la détermination d'un état de la surface de route.

3. Appareil de détermination (2) selon la revendication 1 ou 2, dans lequel la partie de calcul de pente (28) calcule la pente sur la base du taux de glissement et de la force d'entraînement à l'instant de la détermination d'un état de la surface de route, et de l'interception qui a déjà été obtenue, dans le cas où il est déterminé que la variation est inférieure à la certaine valeur à l'instant de la détermination d'un état de la surface de route, et où il est déterminé qu'une valeur absolue de la force d'entraînement est au moins une certaine valeur.

4. Appareil de détermination (2) selon l'une quelconque des revendications 1 à 3, dans lequel la partie de détermination (29) détermine un état de la surface de route en fonction d'une pente obtenue en pondérant et en composant la pente calculée sur la base de l'ensemble de données du taux de glissement et de la force d'entraînement à l'instant de la détermination d'un état de la surface de route et de l'interception qui a déjà été obtenue, et de la pente qui a déjà été obtenue, dans le cas où il est déterminé que la variation de la force d'entraînement est inférieure à la certaine valeur à l'instant de la détermination d'un état de la surface de route.

5. Procédé de détermination pour déterminer si une surface de route est glissante ou non en tant qu'état de la surface de route sur laquelle un véhicule est en cours de déplacement, comprenant :

l'acquisition séquentiellement d'une vitesse de rotation de pneus adaptés sur le véhicule ;
le calcul séquentiellement d'un taux de glissement des pneus sur la base de la vitesse de rotation acquise séquentiellement ;
l'acquisition séquentiellement d'une force d'entraînement du véhicule ;
le calcul d'une pente du taux de glissement en relation avec la force d'entraînement, en tant que coefficient de régression indiquant une relation linéaire entre le taux de glissement et la force d'entraînement ; et
la détermination d'un état de la surface de route sur la base de la pente, incluant la détermination du fait que la surface de route est glissante dans le cas où la pente calculée est au moins une valeur de seuil ;
**caractérisé en ce que** le calcul de la pente inclut :

le calcul de la pente, et le calcul d'une interception en tant qu'autre coefficient de régression indiquant la relation linéaire, sur la base d'un nombre important d'ensembles de données du taux de glissement et de la force d'entraînement à l'instant de la détermination d'un état de la surface de route et avant, dans le cas où il est déterminé qu'une variation de la force d'entraînement est au moins une certaine valeur à l'instant de la détermination d'un état de la surface de route ; et
le calcul de la pente sur la base de l'ensemble de données du taux de glissement et de la force d'entraînement à l'instant de la détermination d'un état de la surface de route, et de l'interception qui a déjà été obtenue, dans le cas où il est déterminé que la variation est inférieure à la certaine valeur à l'instant de la détermination d'un état de la surface de route.

6. Programme de détermination pour déterminer si une surface de route est glissante ou non en tant qu'état de la surface de route sur laquelle un véhicule est en cours de déplacement, le programme forçant un ordinateur à exécuter :

l'acquisition séquentiellement d'une vitesse de rotation de pneus adaptés sur le véhicule ;
le calcul séquentiellement d'un taux de glissement des pneus sur la base de la vitesse de rotation acquise séquentiellement ;
l'acquisition séquentiellement d'une force d'entraînement du véhicule ;
le calcul d'une pente du taux de glissement en relation avec la force d'entraînement, en tant que coefficient de régression indiquant une relation linéaire entre le taux de glissement et la force d'entraînement ; et
la détermination d'un état de la surface de route sur la base de la pente, incluant la détermination du fait que la surface de route est glissante dans le cas où la pente calculée est au moins une valeur de seuil ;
**caractérisé en ce que** le calcul de la pente inclut :

le calcul de la pente, et le calcul d'une interception en tant qu'autre coefficient de régression indiquant la relation linéaire, sur la base d'un nombre important d'ensembles de données du taux de glissement et de la force d'entraînement à l'instant de la détermination d'un état de la surface de route et avant, dans le cas où il est déterminé qu'une variation de la force d'entraînement est au moins une certaine valeur à l'instant de la détermination d'un état de la surface de route ; et
le calcul de la pente sur la base de l'ensemble de données du taux de glissement et de la force d'entraînement à l'instant de la détermination d'un état de la surface de route, et de l'interception qui a déjà été obtenue, dans le cas où il est déterminé que la variation est inférieure à la certaine valeur à l'instant de la détermination d'un état de la surface de route.

Fig.1

Fig.2

Fig.3

```
                          ( Start )
                             │
   ┌─────────────────────────┤
   │  ┌──────────────────────────────────────┐ ┌S1
   │  │ Acquire rotational velocities V1 to V4 of tires │
   │  └──────────────────────────────────────┘
```

**S1** Acquire rotational velocities V1 to V4 of tires

**S2** Acquire acceleration α of vehicle

**S3** Acquire lateral acceleration γ

**S4** Acquire turning radius R

**S5** Calculate slip ratio S

**S6** Filter slip ratio S and driving force F

Number of data sets ≥ N1? — NO

YES

Relationship information specified? — YES

NO

**S7** Specify relationship between turning radius R and slip ratio S
$S = a_1(1/R)^2 + b_1(1/R) + c_1$

**S8** Specify relationship between lateral acceleration γ, driving force F, and slip ratio S
$S = (a_2\gamma^2 + b_2\gamma + c_2)F + f_2$

**S9** Calculate slip ratio S in which influence of difference between left and right tracks during turning is canceled based on relationship between turning radius R and slip ratio S

**S10** Calculate slip ratio S in which influence of load shift in left-right direction during turning is canceled based on relationship between lateral acceleration γ, driving force F, and slip ratio S

**S11** Variation of driving force is at least certain value? — NO

YES

**S12** Calculate slope f1 and intercept f2 using iterative least square technique

**S13** Intercept $f_2$ has been already obtained? — NO

YES

**S14** Absolute value of driving force F is at least certain value? — NO

YES

**S15** Slope $f_1' = $ (slip ratio S - intercept $f_2$) / driving force F

**S16** $f_1 = (1-r)f_1 + rf_1'$

**S17** Determine state of road surface based on slope $f_1$

19

Fig.4

Slip ratio S (left-right average, left wheels, right wheels)

$S=a_1(1/R)^2+b_1(1/R)+c_1$

Inverse number of turning radius 1/R

Right turning

Left turning

Fig.5

Slope $f_1$ (left-right average)

$f_1 = a_2 \gamma^2 + b_2 \gamma + c_2$

Right turning

Left turning

Lateral acceleration $\gamma$

Fig.6

Slip ratio S (left-right average, left wheels, right wheels)

State of road surface changes

$S=f_1F+f_2$

State of road surface changes

$f_2$

Driving force F

Fig.7

Fig.8 A

Slope $f_1$ (left wheels)

$f_1 = a\gamma^3 + b\gamma^2 + c\gamma + d$

Lateral acceleration $\gamma$

Right turning          Left turning

Fig.8B

Slope $f_1$ (right wheels)

$f_1 = a\gamma^3 + b\gamma^2 + c\gamma + d$

Lateral acceleration $\gamma$

Right turning          Left turning

Fig.9

Vehicle velocity

Slope f$_1$

Descent          Descent

Time,sec

● Reference Simulation Example 1

○ Simulation Example 1

Fig.10A

γ<-0.15G

(Reference Simulation Example 2) without correction
based on inverse number of turning radius R

y=0.0344x+0.0011

(Simulation Example 2) with correction based on inverse
number of turning radius R

y=0.0323x+0.0005

Fig.10B

-0.15G < γ < -0.05G

(Reference Simulation Example 2) without correction based on inverse number of turning radius R

y=0.0292x+0.0008

(Simulation Example 2) with correction based on inverse number of turning radius R

y=0.029x+0.0007

Fig.10C

-0.05G < γ < 0.05G
(Reference Simulation Example 2) without correction
based on inverse number of turning radius R

(Simulation Example 2) with correction based on inverse
number of turning radius R

Fig.10D

0.05G < γ < 0.15G
(Reference Simulation Example 2) without correction
based on inverse number of turning radius R

(Simulation Example 2) with correction based on inverse
number of turning radius R

Fig.10E

0.15G < γ

(Reference Simulation Example 2) without correction based on inverse number of turning radius R

(Simulation Example 2) with correction based on inverse number of turning radius R

Fig.11

—— Simulation Example 1
══ Reference Simulation Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002274357 A
- JP 2002362345 A
- CN 110588657 A
- CN 110203205 A
- WO 2007116123 A1